# EUROPÄISCHE PATENTANMELDUNG

(11) **EP 1 314 387 A1**
(43) Veröffentlichungstag der Anmeldung: **28.05.2003**
(21) Anmeldenummer: 02025839.8
(22) Anmeldetag: 19.11.2002
(51) Int. Cl.: A47J 39/00

(54) **Gerät zum Zubereiten von Nahrungsmitteln mittels Dampf und/oder Heissluft**

(30) Priorität: 27.11.2001 DE 10157808; 07.12.2001 DE 10160152
(71) Anmelder: Rzemieniuk, Bernhard, 86911 Diessen/Ammersee (DE)
(72) Erfinder: Rzemieniuk, Bernhard, 86911 Diessen/Ammersee (DE); Mühsam, Walter Peter, 82266 Inning (DE); Müsel, Gerd, 88161 Lindenberg (DE)
(74) Vertreter: von Kirschbaum, Albrecht, Dipl.-Ing.

(57) **Zusammenfassung**

Bei einem Gerät zum Zubereiten von Nahrungsmitteln mittels Dampf und/oder Heißluft, das an die Wasserversorgung und gegebenenfalls das Abwassersystem eines Hauses angeschlossen ist und unter einem Garraum (100) einen Abwasserraum (200) aufweist, ist zusätzlich unter dem Garraum (100) ein Frischluftraum (300) vorgesehen. Verbindungsleitungen (107, 108) zwischen dem Garraum (100) und dem Frischluftraum (300) bzw. dem Abwasserraum (200) weisen gegebenenfalls jeweils einen gesteuert positionierbaren, dampfdichten Verschluss (303, 308, 310; 203, 216, 218) auf. Der Abwasserraum (200) steht gegebenenfalls über eine Wasservorlage (512, 513; 512', 515) mit einer Abluftleitung (204) in Verbindung.

Die Wasservorlage bzw. der dampfdichte Verschluss ist vorzugsweise ein mit Flüssigkeit (512) gefüllter, motorgesteuert positionierbarer, schwenkbarer konkaver Körper (513), in welche(n) die Abluftleitung (204) vorsteht und welchem gegebenenfalls ein in der Flüssigkeit (512) schwimmendes, vorzugsweise geführtes Dichtelement zugeordnet ist.

## Beschreibung

Die Erfindung betrifft ein Gerät zum Zubereiten von Nahrungsmitteln mittels Dampf und/oder Heißluft gemäß dem Oberbegriff eines der Ansprüche 1, 6, 9 oder 10.

Aus EP 0 582 238 ist ein derartiges Gerät (Ofen) bekannt, in welchem eine Abflussvorrichtung mit einer Wasservorlage versehen ist, durch welche der Abflussraum dampfdicht in Richtung Abflussleitung verschlossen wird. Die Problematik der Abwassersicherheit ist in EP 0 848 115 A2 in ähnlicher Weise gelöst, indem durch eine normgerechte Auslegung der geometrischen Abmessungen ein fester Abwasseranschluss realisiert ist. Bei Geräten der jüngeren Generation ist eine Frischluftzufuhr vorgesehen, die gesondert von der Abwassereinheit positioniert und angesteuert ist.

Aufgabe der Erfindung ist es, ein Gerät zum Zubereiten von Nahrungsmitteln mittels Dampf und/oder Heißluft zu schaffen, das wenig Platz beansprucht, die Umwelt wenig belastet und Energie spart.

Gemäß der Erfindung ist dies bei einem Gerät nach dem Oberbegriff der Ansprüche 1, 6, 9 oder 10 durch die Merkmale im kennzeichnenden Teil des jeweiligen Anspruchs erreicht. Vorteilhafte Weiterbildungen der Erfindung sind Gegenstand der auf die Ansprüche 1, 6, 9 und 10 unmittelbar oder mittelbar rückbezogenen Ansprüche.

Gemäß der Erfindung ist zusätzlich zu dem Abwasserraum unter dem Garraum ein Frischluftraum vorgesehen. Gemäß einer ersten bevorzugten Ausführungsform der Erfindung ist einer Verbindungsleitung zwischen Gar- und Frischluftraum ein gesteuert positionierbarer, dampfdichter Verschluss zugeordnet, während eine weitere Verbindungsleitung zwischen Gar- und Abwasserraum gegebenenfalls einen gesteuert positionierbaren, dampfdichten Verschluss aufweist. Ferner steht der Abwasserraum gegebenenfalls über eine Wasservorlage mit einer Abluftleitung in Verbindung.

Gemäß einer zweiten bevorzugten Ausführungsform der Erfindung sind der ebenfalls unter dem Garraum vorgesehene Frischluftraum und der Abwasserraum über eine Wasservorlage miteinander verbunden und durch eine in die Wasservorlage vorstehende Trennwand voneinander getrennt. Bei einer vorteilhaften Abwandlung der Erfindung kann die Wasservorlage auch als mindestens ein die Böden des Abwasser- und des Frischlauftraums verbindender, mit Flüssigkeit gefüllter Rohrbogen ausgebildet sein. Jedoch kann der Abwasserraum beispielsweise auch über eine Wasservorlage einer Fettabscheidevorrichtung mit der Abluftleitung in Verbindung stehen. Gemäß einer vorteilhaften Weiterbildung der Erfindung steht eine Trennwand und eine mit dieser verbundene Leitung im Abwasserraum in die Wasservorlage vor.

Bei einer vorteilhaften Ausgestaltung der Erfindung weist eine Wasservorlage und/oder ein dampfdichter Verschluss einen mit Flüssigkeit gefüllten, motorgesteuert positionierbaren, schwenkbaren, konkaven Körper und ein in der Flüssigkeit schwimmendes, vorzugsweise geführtes Dichtelement auf. Bei einer weiteren vorteilhaften Ausgestaltung kann der dampfdichte Verschluss in Form einer mit einem Überdruckventil versehenen, gesteuert positionierbaren planen Verschlussklappe ausgeführt sein.

Gemäß einer vorteilhaften Weiterbildung der Erfindung ist von dem Frischluftraum ein freier, nach außen führender, nicht verschließbarer Zugang vorgesehen. Dieser Zugang ist so dimensioniert und positioniert, dass selbst bei Eintreten eines extremen Störfalls, bei welchem beispielsweise die Abflussleitung(en) und auch die Fettablaufleitung(en) verstopft und/oder verschlossen sind, Wrasen aus dem Garraum, gegebenenfalls Wasser aus den im Abwasser- und Frischluftraum vorgesehenen Düsen und möglicherweise sogar Rückstauwasser aus der Abflussleitung durch die Wasservorlage zwischen Abwasserund Frischluftraum über den nicht verschließbaren Zugang an der Vorderseite des Geräts nach außen geleitet werden. Obendrein ist die Dimensionierung und Positionierung des nicht verschließbaren Zugangs so gewählt, dass mit Sicherheit ausgeschlossen ist, dass die Düsen im Frischluft- und/oder Abwasserraum mit Abwasser und gegebenenfalls mit Rückstauwasser aus der Abflussleitung u.ä. in Kontakt kommen.

Ferner ist gemäß einer vorteilhaften weiteren Ausgestaltung der Erfindung eine zentrale Einheit in Form eines Wasserdurchflußzählers allen in dem Gerät benötigten Sperrventilen vorgeschaltet, über welche die im Gerät vorgesehenen Düsen und/oder Wassereinspritzvorrichtungen versorgt werden. Durch die zentrale Einheit ist sichergestellt, dass immer nur ein Sperrventil geschaltet wird. Von dem Wasserdurchflusszähler abgegebene Signale werden über eine Steuer- und/oder Regeleinheit zum optimalen Steuern und/oder Regeln der verschiedenen mit dem Gerät durchführbaren Garprozesse verwendet. Ferner werden die Signale über eine Diagnostiziereinrichtung zur Diagnose und Überwachung verschiedener Abläufe verwendet, wie beispielsweise der korrekten Aufbereitung von Heißluft- und Dampf, zum Steuern des gewünschten bzw. benötigten Drucks im Garraum, u.ä..

Ferner kann gemäß einer weiteren vorteilhaften Ausgestaltung der Erfindung der Abwasserraum einen türseitigen und einen abluftseitigen Bereich aufweisen, wobei zwischen den Abwasserraum-Bereichen der Frischluftraum vorgesehen ist und die beiden Bereiche durch eine Verbindungseinheit miteinander verbunden sind. Zusätzlich ist die Verbindungseinheit zwischen den beiden Abwasserraum-Bereichen mit einer Wärmetauscherfläche versehen, was wiederum den Vorteil hat, dass dem Garraum zugeführte Frischluft vorgewärmt wird. Da die Wärme dem aus dem Garraum austretenden Gemisch (Wrasen) entnommen wird, kann Energie eingespart werden. Ein ähnlicher Effekt kann auch erreicht werden, wenn die Frischluft-Zuführleitung zum Teil durch den Abwasserraum geführt und dieser Teil der Frischluft-Zuführleitung mit einer Wärmetauscherfläche versehen ist. Ferner ist auch bei dem erfindungsgemäßen Gerät eine Fettabscheidevorrichtung vorgesehen, so dass das in das Abfluss-System eingespeiste Abwasser im wesentlichen fettfrei ist und somit die Umwelt nicht belastet'wird.

Das erfindungsgemäße Gerät weist somit aufgrund der Anordnung und Ausführung der Abwasser- und Frischlufteinrichtungen sowie durch das Zusammenfassen von Frischluftzuleitung, Abwasserabfluss und Abwasserüberlaufleitung zu einem einzigen Teil einen ausgesprochen kompakten Aufbau auf. Ferner ist von der Gerätevorderseite ein leichter Zugang somit und eine einfache wenig zeitaufwendige Wartung dieses Bereichs des erfindungsgemäßen Geräts ermöglicht.

Nachfolgend wird die Erfindung anhand der anliegenden Zeichnungen im einzelnen erläutert. Es zeigen:
- Fig.1: in schematischer Darstellung eine bevorzugte Ausführungsform eines Geräts gemäß der Erfindung mit geschlossenem Garraum;
- Fig.2: in schematischer Darstellung ein erstes gegenüber Fig.1 modifiziertes Gerät mit offenem Garraum;
- Fig.3: eine vorteilhafte Ausführungsform eines motorgesteuert positionierbaren dampfdichten Verschlusses;
- Fig.4: einen über die Eintauchtiefe steuerbaren dampfdichten Verschluss;
- Fig.5: eine schematische Darstellung einer weiteren Ausführungsform eines motorgesteuerten dampfdichten Verschlusses;
- Fig.6: eine schematische Darstellung einer modifizierten Wasservorlage zwischen Frischluft- und Abwasserraum;
- Fig.7: eine schematische Darstellung eines extremen Störfalles in dem Gerät;
- Fig.8: eine modifizierte Ausführungsform des Geräts gemäß Fig.1 oder 2;
- Fig.9: eine schematische Darstellung eines Wärmetauschers in der Frischluftleitung;
- Fig.10a bis 10c: vorteilhafte Vorrichtungen zum Abkühlen von Abluft;
- Fig.11: eine zweite gegenüber Fig.1 im Abwasserbereich abgewandelte Ausführungsform;
- Fig.12: einen gegenüber Fig.11 geänderte Ausführungsform mit offenem Garraum;
- Fig.13: eine gegenüber Fig.12 vereinfachte Ausführung mit offenem Garraum und
- Fig.14: eine Fig.13 entsprechende Ausführungsform mit Absaugvorrichtung.

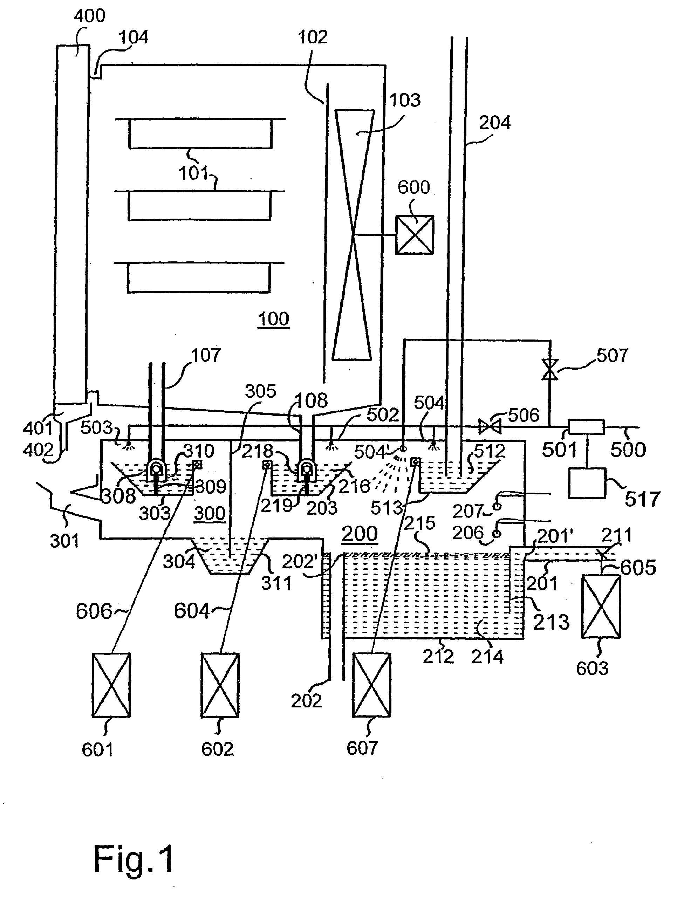

In der schematischen Darstellung der Fig.1 ist eine bevorzugte Ausführungsform eines Geräts zum Zubereiten von Nahrungsmitteln mittels Dampf und/oder Heißluft wiedergegeben, in dessen Garraum 100, welcher ohne Heißluftheizung und/oder Dampfentwickler dargestellt ist, schematisch angedeutete Gargutbehälter 101, ein Luftleitblech 102 und e'in von einem Motor 600 angetriebenes Umluftrad 103 vorgesehen sind.

Auf der in Fig.1 linken Seite ist der Garraum durch eine Tür 400 mit Türdichtung 104 abgeschlossen; die Tür weist unten eine Türtropfwanne 401 mit einem Abfluss 402 auf. Unter dem Garraum 100 sind ein Abwasserraum 200 und ein Frischluftraum 300 angeordnet, die über Verbindungsleitungen 108 bzw. 107 mit dem Garraum 100 verbunden sind.

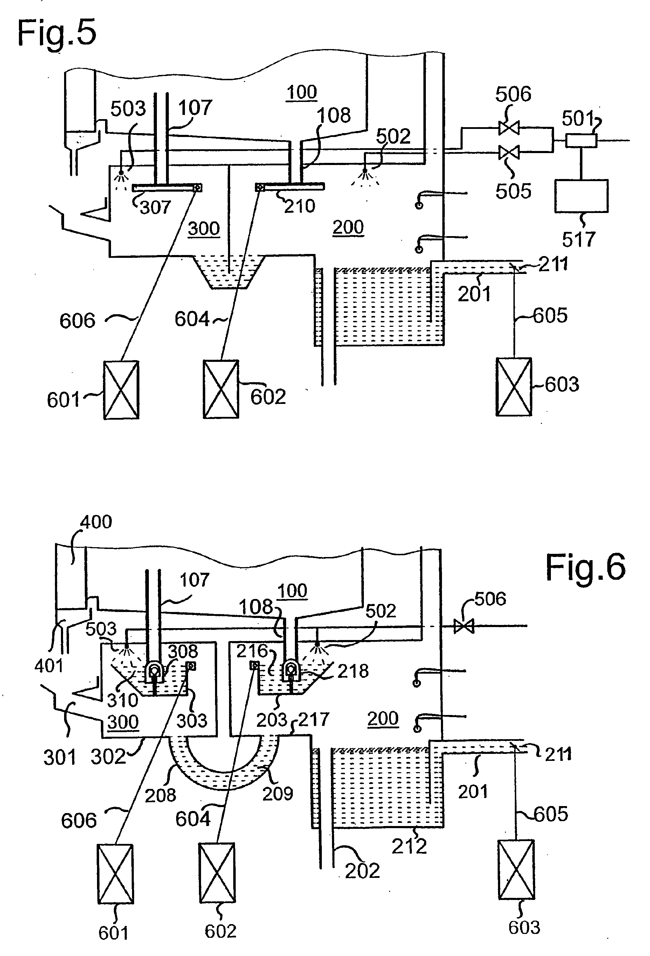

Der Abwasserraum 200 und der Frischluftraum 300 sind durch eine dampfdichte Verbindung in Form einer in eine Wasservorlage 304 vorstehende Trennwand 305 oder in Form eines die Böden 217 bzw. 302 der beiden Räume 200 und 300 verbindenden, mit Flüssigkeit 209 gefüllten Rohrbogens 203 (siehe Fig.6) miteinander verbunden.

Die Verbindungsleitungen 107 und 108 sind an ihren in den Frischluftraum 300 bzw. den Abwasserraum 200 vorstehenden Enden jeweils mit dampfdichten Absperrvorrichtungen versehen.

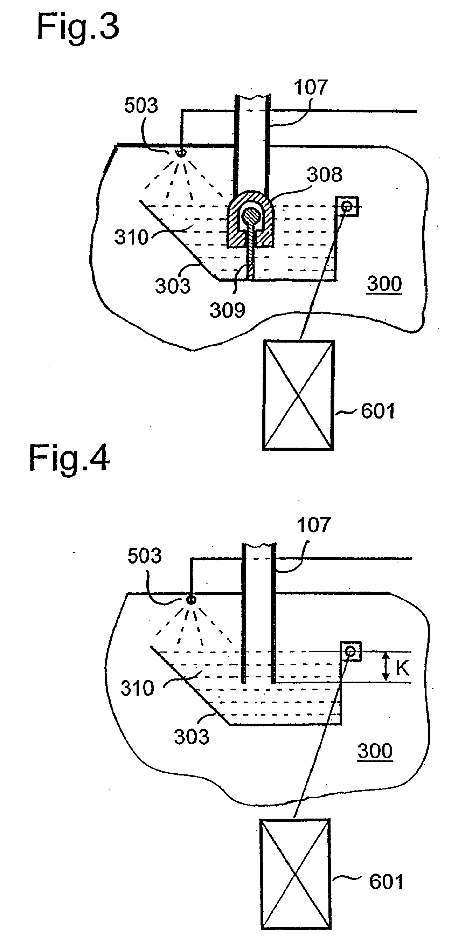

Die in Fig.1 und 6 dargestellten bevorzugten Ausführungsformen von Absperrvorrichtungen weisen jeweils einen konkaven, schwenkbar gelagerten und mit Flüssigkeit 216 bzw. 310 gefüllten Körper 203, 303, jeweils ein schwimmendes Dichtelement 218 bzw. 308 mit entsprechender Führung 219, 309 auf. (Siehe auch die vergrößerte schematische Darstellung in Fig.4).

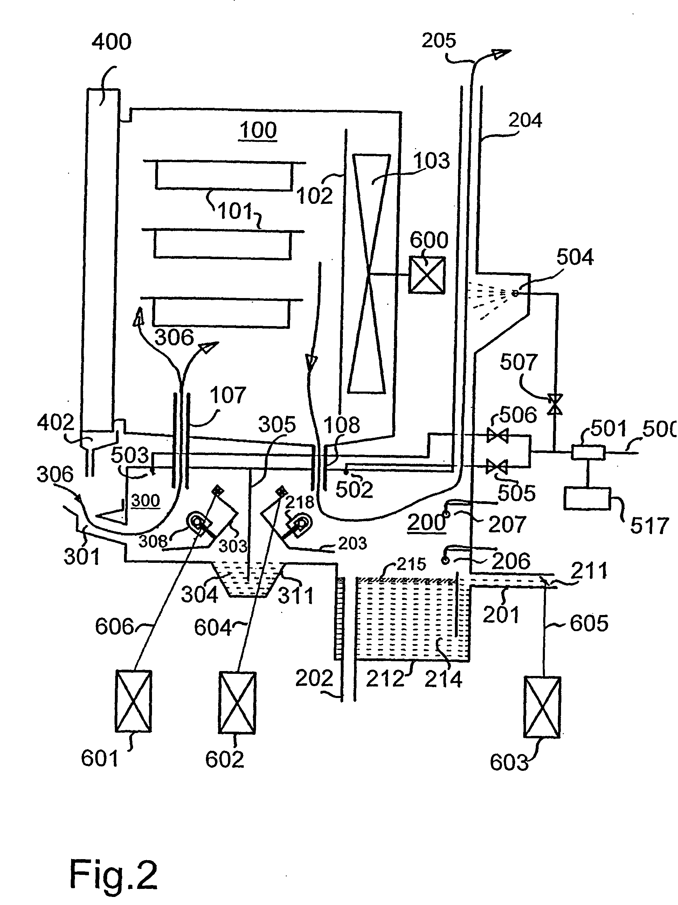

Die konkaven Körper 203, 303 sind über schematisch angedeutete Abtriebswellen 604, 606 von Motoren 602, 601 stufenlos zwischen den in Fig.1, 2 und 6 wiedergegebenen Endlagen schwenkbar. Die konkaven Körper 203, 303 können aus der in Fig.2 wiedergegebenen Endlage mit Hilfe der Motoren 602, 601 in die beispielsweise in Fig.1 oder 6 wiedergegebene waagrechte Lage gebracht werden. Die jeweils erforderlichen Positionierelemente sind in den Zeichnungen nicht wiedergegeben.

In Fig.3 ist der motorgesteuert positionierbare dampfdichte Verschluss, beispielsweise der Verbindungsleitung 107 vergrößert dargestellt. Mittels eines durch die Führung 309 geführten Dichtelements 308, das in der Flüssigkeit 310 des konkaven Körpers 303 schwimmt, ist die Verbindungsleitung 107 dampfdicht abgeschlossen. Diese Führung kann auch in Form eines schwenkbar gelagerten Arms und/oder eines aus mindestens zwei Fäden bestehenden Netzes ausgeführt sein, was in Fig.3 nicht dargestellt ist. Außer der in Fig.3 wiedergegebenen Form kann das Dichtelement 308 auch beispielsweise kegelig, kugelförmig, u.ä. ausgeführt sein. Die Verbindungsleitung 108 oder auch die Abluftleitung 204 können mit einer entsprechend ausgelegten Absperrvorrichtung dampfdicht geschlossen werden.

Durch die Eintauchtiefe des Dichtelements 308 in die Flüssigkeit 310 des konkaven Körpers 303, die entweder durch das Füllvolumen des konkaven Körpers 303 und/oder durch die Schwenkposition des Körpers 303 festlegbar ist, ergibt sich der Verschlussdruck des Dichtelements 308. Dieser Druck ist somit eine Funktion des Eintauchvolumens des Dichtelements, seines Gewichts, der Dichte der Flüssigkeit 310, der Reibung an der Führung 309 sowie des Gegendrucks im Garraum 100. Wenn der Gegendruck im Garraum 100 größer ist als der Verschlussdruck des im konkaven Körper 203 schwimmenden Dichtelements 218 wird dieses nach unten gedrückt und die Flüssigkeit und/oder das Dampf-Luftgemisch (Wrasen) wird aus dem Garraum 100 herausgedrückt.

Im Falle eines Unterdrucks im Garraum 100 kann das Dichtelement 308 vorzugsweise so ausgeführt sein, dass es in der Mitte eine dünnwandige Membran aufweist, die bei Unterdruck hochgezogen wird, so dass dadurch eine Ansaugöffnung zum Garraum 100 frei gemacht wird. (Diese Variante ist in Fig.3 nicht dargestellt).

In Fig.4 ist eine weitere Variante eines dampfdichten Verschlusselements dargestellt, bei welchem beispielsweise wiederum die Verbindungsleitung 107 direkt in die Flüssigkeit 310 des konkaven Körpers 303 mit einer Eintauchtiefe K vorsteht. Ein Überdruck im Garraum 100 würde dann die Eintauchtiefe K entsprechen. Bei Unterdruck im Garraum wird zuerst Flüssigkeit 310 aus dem konkaven Körper 303 angesaugt, und zwar so lange, bis die Drücke innerhalb und außerhalb des Garraums ausgeglichen sind. Mit der vorstehend beschriebenen Verschlussvariante können alle Verbindungen zum Garraum sowie auch die Verbindung zur Abluftleitung versehen werden.

In Fig.5 ist schematisch eine weitere Ausführungsform einer Verschlussvorrichtung in Form einer planen schwenkbaren Verschlussklappen 210 im Abwasserraum 200 bzw. einer planen schwenkbaren Verschlussklappe 307 im Abwasserraum 300 dargestellt, die jeweils über Abtriebswellen 604, 606 der Motore 601 bzw. 602 verstellbar sind.

In der in Fig.1 und 6 wiedergegebenen waagrechten Lage sind die konkaven Körper 203, 303 über ihnen zugeordnete Düsen 502, 503, welche über Sperrventile 505, 506 (siehe Fig.2) und einen Wasserdurchflusszähler 501 mit einer Frischwasser-Zuführleitung 500 in Verbindung stehen, auf ein einem vorgewählten Verschlussdruck entsprechendes Volumen (Wasserhöhe) gefüllt. Von der jeweils verdrängten Flüssigkeitsmenge ist die Auftriebskraft des schwimmenden, in das Wasser eingetauchten Dichtelements 218 bzw. 308 abhängig. Die Dichtelemente 218, 308 werden gegen nicht näher bezeichnete Sitzflächen der Verbindungsleitungen 107 bzw. 108 gedrückt; dadurch sind die in den jeweiligen Raum vorstehenden Enden der beiden Verbindungsleitungen 107, 108 in Richtung Frischluftraum 300 bzw. Abwasserraum 200 geschlossen.

Reicht ein niedrigerer Verschlussdruck aus, wird, je nachdem in welcher Lage sich die konkaven Körper 203 bzw. 303 befinden, der jeweilige Körper - gesteuert über eine Steuer-/Regeleinrichtung 517 - entweder weniger gefüllt und/oder mittels des ihm zugeordneten Motors 602 bzw. 601 entsprechend geschwenkt (gekippt) und dadurch teilweise entleert. Zum Öffnen der beiden Verbindungsleitungen 107, 108 in Richtung Frischluftraum 300 bzw. Abwasserraum 200 werden die jeweiligen konkaven Körper 303, 203 mittels der ihnen zugeordneten Motore 601 bzw. 602, 604 in die in Fig.2 wiedergegebenen Lagen gebracht.

Sind beide Garraumverbindungen 107, 108 durch die in die, in Fig.1 bzw. 6 wiedergegebenen Lagen gebrachten konkaven Körper 203 und 303 geschlossen, fungieren die beiden schwimmenden Dichtelemente 217 und 308 als eine Art Überdruck-Sicherheitsventile. Beim Überschreiten eines bestimmten Drucks im Inneren des Garraums wird/werden eines der beiden oder beide Druckelemente 217, 308 nach unten gedrückt, wodurch die entsprechende(n) Verbindungsleitung(en) 107, 108 geöffnet wird/werden.

An den Abwasserraum 200 ist eine Abluftleitung 204 entweder unmittelbar angeschlossen (siehe Fig.2) oder die Abluftleitung 204 steht beispielsweise in einen mit Flüssigkeit 512 gefüllten, konkaven Körper 513 vor (siehe Fig.1), welcher mittels eines Motors 607, ähnlich wie die konkaven Körper 203 und 303, schwenkbar gelagert ist und über eine Düse 504 gefüllt werden kann, bis die erforderliche Eintauchtiefe der Abluftleitung 204 erreicht ist. Alternativ kann in dem konkaven Körper 213 auch ein den geführten Dichtelementen 218 bzw. 308 entsprechendes Dichtelement vorgesehen sein, was jedoch in den Zeichnungen im einzelnen nicht dargestellt ist.

Dem Abwasserraum 200 ist ferner eine Fettabscheidevorrichtung zugeordnet, die aus einem Abwasser-Auffangbehälter 212, mindestens einem Fettablaufrohr 202 mit Überlaufkante 202', mindestens einem Fettabweiser 213, einer Abflussleitung 201 mit Überlaufkante 201' und einer Absperrklappe 211 besteht, welche über eine Abtriebswelle 605 eines Antriebsmotors 603 verstellbar ist.

Auf der Oberfläche des mit Abwasser 214 gefüllten Auffangbehälters 212 ist eine Fettschicht 215 angedeutet, über welcher eine Sonde 206 positioniert ist, mittels welcher aufgrund einer elektrischen Leitfähigkeitsänderung und/oder einer Veränderung in der optischen Reflexion und/oder durch eine Schallwellenanalyse-Veränderung eine vorhandene Fettschicht erkannt wird.

Von dieser Sonde 206 wird beispielsweise über die Steuer-/Regeleinheit 517 der Motor 603 gesteuert und von diesem die in der Abflussleitung 201 vorgesehene Abfluss-Sperrklappe 211 so verstellt, dass durch die Klappe 211 die Abflussleitung 201 beispielsweise bei einem Sondensignal "Fett vorhanden" gesperrt wird, während sie sonst frei gehalten wird. Auf diese Weise ist sicher gestellt, dass in das Abwasserabflusssystem des Hauses, an welches die Abflussleitung 201 im allgemeinen angeschlossen ist, immer nur im wesentlichen fettfreies Abwasser geleitet wird.

Ferner ist in dem Abwasserraum 200 mindestens eine Ablöschdüse 504' vorgesehen, die in Fig.1 beispielsweise über ein Absperrventil 507 und den Wasserdurchflusszähler 501 mit der Frischwasserzufuhrleitung 500 verbunden ist. Ferner ist in dem Abwasserraum 200 eine Temperatursonde 207 vorgesehen, mittels welcher u.a. die Temperatur der über die Abluftleitung 204 nach außen geleiteten Abluft gemessen wird.

Sobald die mittels der Sonde 207 gemessene Temperatur der abzuleitenden Abluft einen bestimmten Grenzwert überschreitet, wird von Sonde 207 gesteuert, das Sperrventil 507 entsprechend geöffnet, so dass überschüssiger Dampf und/oder Wrasen den durch den über die Ablöschdüse 504' abgegebenen Wasserstrahl soweit abgekühlt wird, dass die Temperatur der Abluft im zulässigen Temperaturbereich liegt.

In Fig.2 ist schematisch ein Austauschen des im Garraum 100 herrschenden Klimas durch gesteuerte Zuführung von Frischluft 306 dargestellt. Durch Schwenken der beiden konkaven Körper 203 und 303 in die in Fig.2 wiedergegebene Lage werden die beiden Körper entleert und dadurch die beiden in den Garraum 100 führenden Verbindungsleitungen 107 und 108 geöffnet.

Durch einen sich dabei ergebenden Druckunterschied wird Frischluft 306 über einen nicht verschließbaren Zugang 301, den Frischluftraum 300 und die Verbindungsleitung 107 in den Garraum 100 angesaugt. Gleichzeitig wird das im Garraum 100 vorhandene Garklima über die Verbindungsleitung 108, den Abwasserraum 200 und die Abluftleitung 204 als Abluft 205 nach außen geleitet.

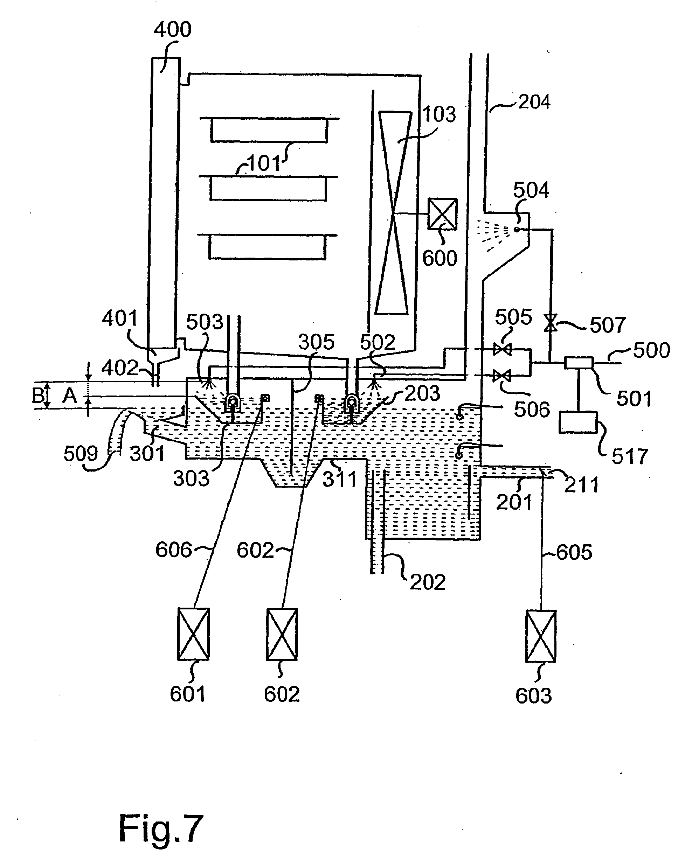

Da ferner die Wasservorlage 304 oder 209 (Fig.7) im Rohrbogen 208 regelmäßig gesteuert gereinigt wird, bleibt auch der Frischluftraum 300 bei normalem, sachgerechten Betrieb sauber. Aufgrund der Dimensionierung des Zugangs 301 ist eine entsprechende Reinigung und damit ein Sauberhalten des Frischluftraums 300 von außen ohne nennenswerten Zeitaufwand jederzeit möglich.

In Fig.7 ist schematisch ein extremer Störungsfall dargestellt, bei welchem die Abflussleitung 211 und gegebenenfalls weitere, nicht dargestellte Abflussleitungen und das Fettablaufrohr 202 und gegebenenfalls weitere Fettablaufleitungen verstopft und/oder geschlossen sind. Wie der schematischen Darstellung der Fig.7 zu entnehmen ist, wird in einem solchen Störungsfall das Abwasser vom Garraum 100, das von den Düsen 502 bis 504 abgegebene Wasser und auch theoretisch mögliches Rückstauabflusswasser aus der Abflussleitung 201 durch die Wasservorlage 304 bzw. 208 (siehe Fig.6) und den Frischluftraum 300 zu dem nicht verschließbaren Zugang 301 befördert und über dessen vordere Kante 301' als Überlaufwasser 509 nach außen geleitet.

Damit das Abwasser nicht in Kontakt mit den Frischwasser abzugebende Düsen 502 bis 504 kommt, sind bei der Anordnung der Düsen 502 bis 504 sowie der Anordnung und Ausführung der konkaven Körper 203 und/oder 303 Abstände A und B einzuhalten. Hierbei ist mit A der Abstand von der Austrittsfläche beispielsweise der Düse 503 und der Überlaufkante des maximal gefüllten konkaven Körpers 303 und mit B der Abstand von der Austrittsfläche der Düse 503 und der Kante 301' des nicht verschließbaren Zugangs 301 bezeichnet, wobei gilt: A < B.

Ein weiterer Vorteil, der sich aufgrund der Ausgestaltung und Anordnung des Zugangs 301 ergibt, besteht darin, dass jede derartige Störung im Abflusssystem von der Vorderseite des Geräts aus zu erkennen und festzustellen ist. Ein Druckstoß, der bei offener Verbindungsleitung 108, beispielsweise beim Zuschlagen der Tür 400 auf die Wasservorlage 304 oder 208 wirkt, führt aufgrund des entsprechend groß dimensionierten Frischluftraums 300 bei normalem Betrieb nicht zu einem Überschwappen von Wasser aus dem Gerät.

Tropfwasser aus der den Garraum 100 verschließenden Tür 400 wird über eine unter der Tür angeordnete Türtropfwanne in den Abfluss 402 und in den darunter befindlichen, nicht verschließbaren Zugang 301 geleitet, von dem es unmittelbar in die Wasservorlage 304 weitergeleitet wird.

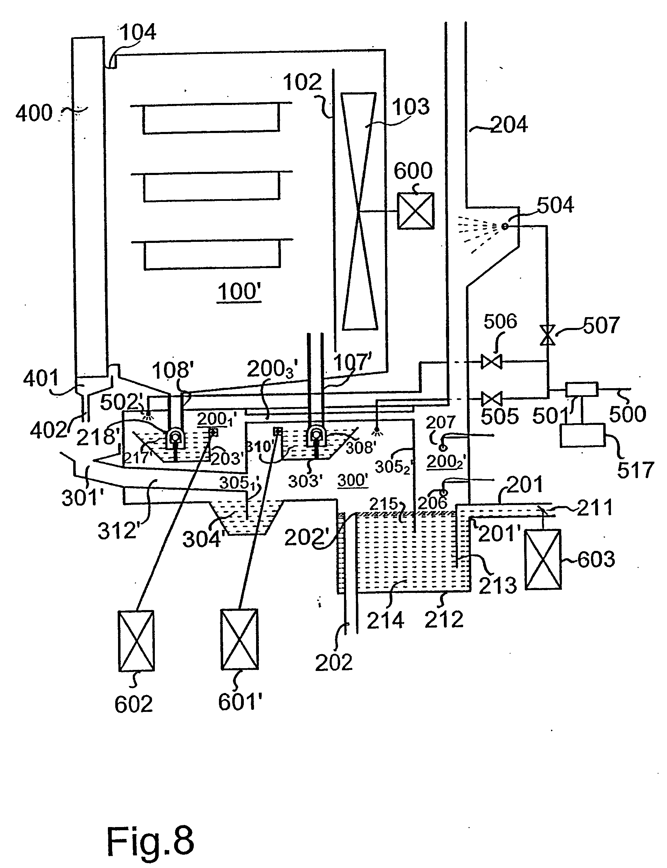

In Fig.8 ist eine gegenüber der Ausführung des Geräts in Fig.1 und 2 modifizierte Ausführungsform wiedergegeben. Der Unterschied zwischen den Ausführungen liegt insbesondere darin, dass der Abwasserraum einen türseitigen Bereich 200₁' sowie einen abluftseitigen Bereich 200₂' aufweist und die beiden Bereiche sind durch eine Verbindung 200₃' miteinander verbunden. Ferner ist zwischen den beiden Abwasserraum-Bereichen 200₁' und 200₂' der Frischluftraum 300' vorgesehen. Der in den türseitigen Abwasserraum-Bereich 200₁' vorstehenden Verbindungsleitung 108' ist ein dem gesteuert positionierbaren dampfdichten Verschluss 203, 216, 218 entsprechender dampfdichter Verschluss 203', 216' und 218' zugeordnet. Der in den Frischluftraum 300' vorstehenden Verbindungsleitung 107' ist ein dem gesteuert positionierbaren dampfdichten Verschluss 303, 308, 310 entsprechender dampfdichter Verschluss 303', 308', 310' zugeordnet.

Zwischen dem türseitgen Abwasserraum-Bereich 200₁' und dem Frischluftraum 300' ist eine Wasservorlage 304' vorgesehen, in welche eine erste Trennwand 305₁' vorsteht. Zwischen dem Frischluftraum 300' und dem abluftseitigen Abwasserraum-Bereich 200₂' ist eine zweite Trennwand 305₂' vorgesehen, die in das als Wasservorlage dienende Abwasser 214 im Auffangbehälter 212 vorsteht.

Durch eine Verbindung 312' in Fig.8 zwischen dem Frischluftraum 300' und dem Zugang 301' ist sichergestellt, dass auch bei einem anhand von Fig.7 beschriebenen Störfall die Abwässer über den nicht verschließbaren Zugang 301' unterhalb der Garraumtür 400 auf der Vorderseite des Geräts nach außen geleitet werden.

Überschüssiger Dampf und/oder Luft-Dampf-Gemisch (Wrasen) wird, wenn die Verbindungsleitung 108' offen steht, d.h. wenn sich der konkave Behälter 203' beispielsweise in einer der Lage des konkaven Körpers 203 in Fig.2 entsprechenden Lage befindet, durch die Verbindung 200₃' in den abluftseitigen Abwasserraum-Bereich 200₂' geleitet und über die Abluftleitung 4 gegebenenfalls durch über die Ablöschdüse 502 abgegebenes Wasser entsprechend gekühlt, nach außen geleitet.

Da überschüssiger Dampf und/oder Wrasen aus dem Garraum 100' eine Temperatur von bis zu 200°C aufweisen kann, wird die Verbindung 200₃' entsprechend erwärmt. Wenn darüber hinaus, was in Fig.8 nicht dargestellt ist, die Verbindung 200₃' mit einer Wärmetauscherfläche versehen ist, wird über den Zugang 301' und die Verbindungsleitung 107' dem Garraum 100' zugeführte Frischluft vorgewärmt; dies wiederum bedeutet, es findet eine Art Wärmerückgewinnung statt und zur Dampferzeugung muss weniger Energie zugeführt werden.

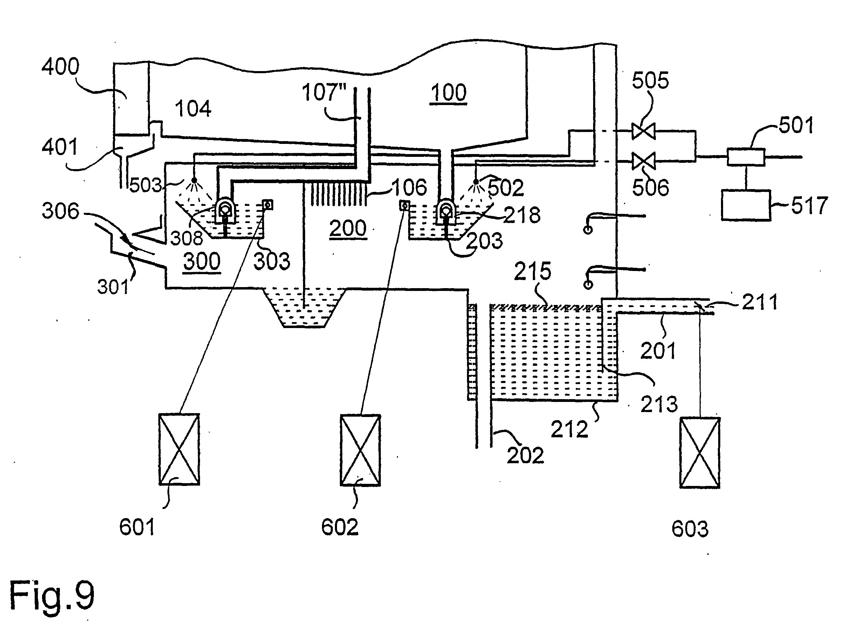

Wie in Fig.9 dargestellt, kann ein ähnlicher Effekt auch dadurch erreicht werden, dass die Verbindung 107", über welche Frischluft von dem Frischluftraum 300 in den Garraum 100 geleitet wird, zum Teil durch den Abwasserraum 200 geführt ist, und der in Fig.9 durch den Abwasserraum 200 geführte Teil der Verbindungsleitung 107' mit einer Wärmetauscherfläche 106 versehen ist.

Wie beispielsweise in Fig.2 angedeutet, kann Abluft 205 über die Abluftleitung 204 direkt nach außen geleitet werden. Da Dampf und/oder Wrasen im allgemeinen zu heiß ist, um direkt in die Atmosphäre abgegeben zu werden, wird Dampf und/oder Wrasen im Abwasserraum 200 über eine Ablöschdüse, wie beispielsweise eine Düse 504' in Fig.1, die beispielsweise über ein Absperrventil 507 an die Frischwasserleitung 500 angeschlossen ist, abgelöscht und dadurch gekühlt.

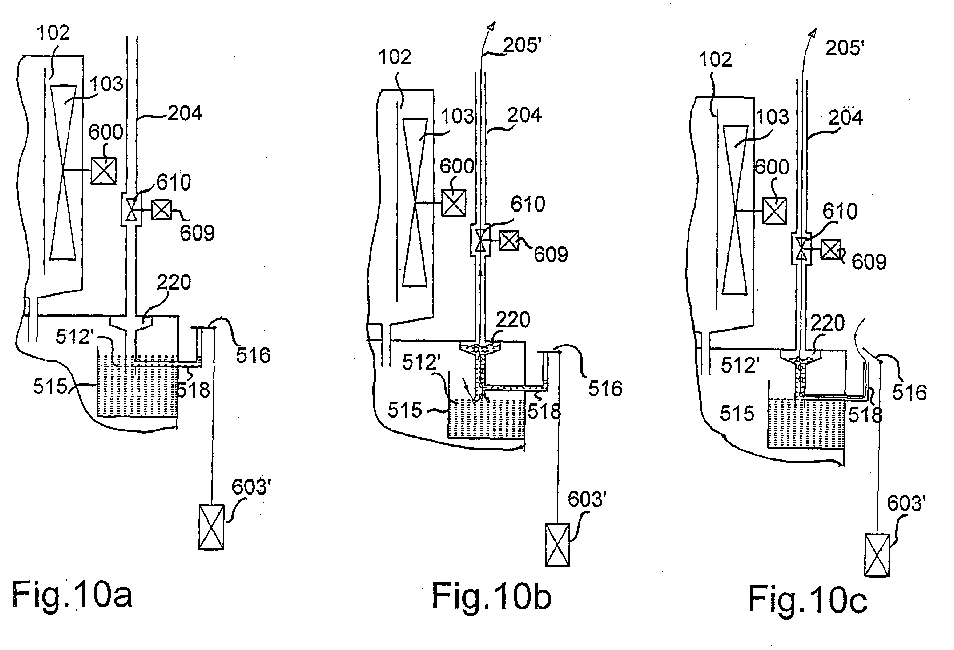

Ein Abschluss der Abluftleitung 204 im Abwasserraum 200 kann in zwei Grundvarianten ausgeführt sein, nämlich ein Abschluss durch einen konkaven, schwenkbaren Körper, wie beispielsweise den Körper 513 in Fig.1, wobei zusätzlich in dem schwenkbaren Körper auch ein vorzugsweise geführtes Dichtelement in der Art des Dichtelements 218 bzw. 308 vorgesehen sein kann, oder ein Abschluss durch eine Wasservorlage, beispielsweise 512' in einen Behälter 515, wie in Fig.10a bis 10c schematisch dargestellt ist.

In Fig.10a bis 10c steht die Abluftleitung 204 in eine Wasservorlage in Form eines mit Flüssigkeit (Wasser) 512' gefüllten stationären Behälters 515 vor. Zum Zuführen von Frischluft ist am unteren Ende der Abluftleitung 204 eine Leitung 518 angeschlossen, an der eine Klappe 516 vorgesehen ist, welche mittels eines Motors 603' verstellbar ist. In der Abluftleitung 204 ist in Fig.10a bis 10c eine von einem Motor 609 angetriebene Saugvorrichtung 610 angeordnet.

Das Abführen eines Dampf-Luft-Gemisches (Wrasens) aus dem Abwasserraum 200 kann entweder durch Saugen (Unterdruck) mittels der Saugvorrichtung 610 oder durch Überdruck erfolgen, was in Fig.10a bis 10c nicht dargestellt ist. Hierbei wird das Gemisch (Wrasen) bei geschlossener Klappe 516 aus dem Abwasserraum durch die Wasservorlage 512' gesaugt bzw. gedrückt, was in Fig.10b durch im unteren Teil der Abluftleitung 204 angedeutete Luftblasen verdeutlicht ist. Aus dem Behälter 515 mitgerissene Flüssigkeit (Wasser) 512' wird in einer Erweiterung 220 der Abluftleitung 204 aufgefangen und strömt von dort in den Behälter 515 zurück.

Die Wasservorlage, d.h. die Flüssigkeit 512' im Behälter 515 kann bei geöffneter Klappe 516 auch durch Einbringen von Frischluft gekühlt werden. Über die Leitung 518 kann die Frischluft hineingedrückt werden. Das Ende des Rohrs 518 kann zur Erhöhung der Austrittsgeschwindigkeit der Luft bei seiner Einmündung in die Abluftleitung 204 beispielsweise in Form einer Venturidüse ausgebildet sein, was in den Zeichnungen nicht näher dargestellt ist.

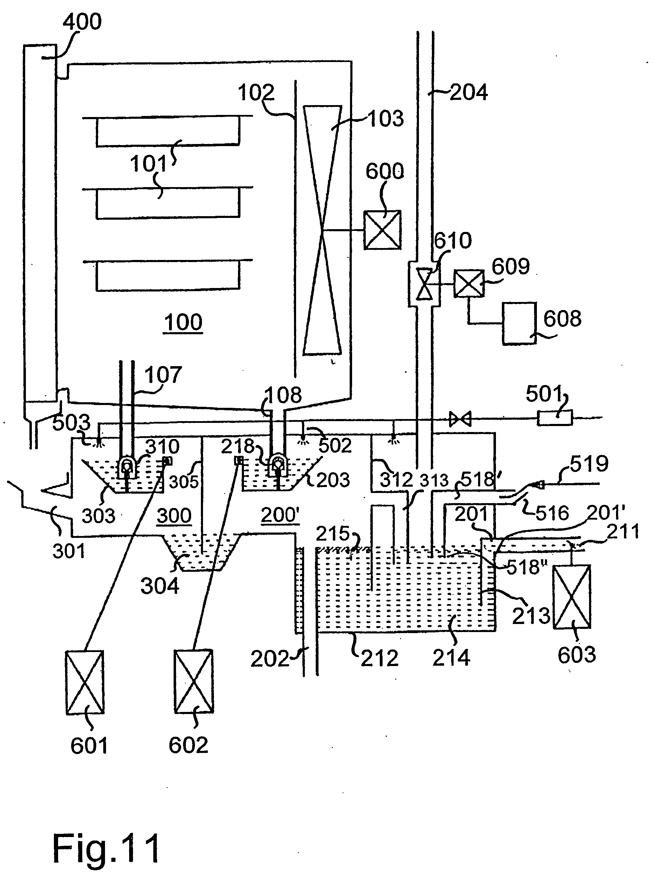

In Fig.11 ist eine zweite gegenüber Fig.1 im abluftseitigen Bereich des Abwasserraums 200' abgewandelte, bevorzugte Ausführungsform wiedergegeben. Hierbei steht eine Trennwand 312 in eine Wasservorlage in Form des Abwassers 214 im Auffangbehälter 212 der Fettabscheidevorrichtung vor. An die Trennwand 312 ist eine Leitung 313 angeschlossen, welche ebenfalls in das Abwasser 214 der Fettabscheidevorrichtung vorsteht. Darüber hinaus ist eine weitere Leitung 518' zum Zuführen von Luft vorgesehen, was in Fig.11 durch eine mit einer Pfeilspitze versehenen Linie 519 angedeutet ist. Auch die Leitung 518' steht in das Abwasser 214 der Fettabscheideeinrichtung vor.

Die Luftzuführleitung 518' ist analog der Luftzuführleitung 518 in Fig.10a bis 10c mit einer motorgesteuerten Luftklappe 516 versehen. Das Leitungsende 518" der Luftzuführleitung 518' in der Wasservorlage 214 liegt tiefer als die Überlaufkante 201' der Abflussleitung 201, liegt jedoch höher als das Leitungsende 313' der Leitung 313. Ferner ist im Unterschied zu Fig.1 in der Abluftleitung 204 eine Absaugeinrichtung 610 vorgesehen, welche von einem durch eine Steuereinheit 608 bezüglich der Drehzahl gesteuerten Motor 609 angetrieben ist.

In Abwandlung der bevorzugten Ausführungsform gemäß Fig.11 kann, was in keiner der Fig.11 bis 14 dargestellt ist, die Abluftleitung 204 auch direkt in die Wasservorlage 212, 214 der Fettabscheidevorrichtung vorstehen. In diesem Fall entfällt die Trennwand mit der an dieser angeschlossenen Leitung.

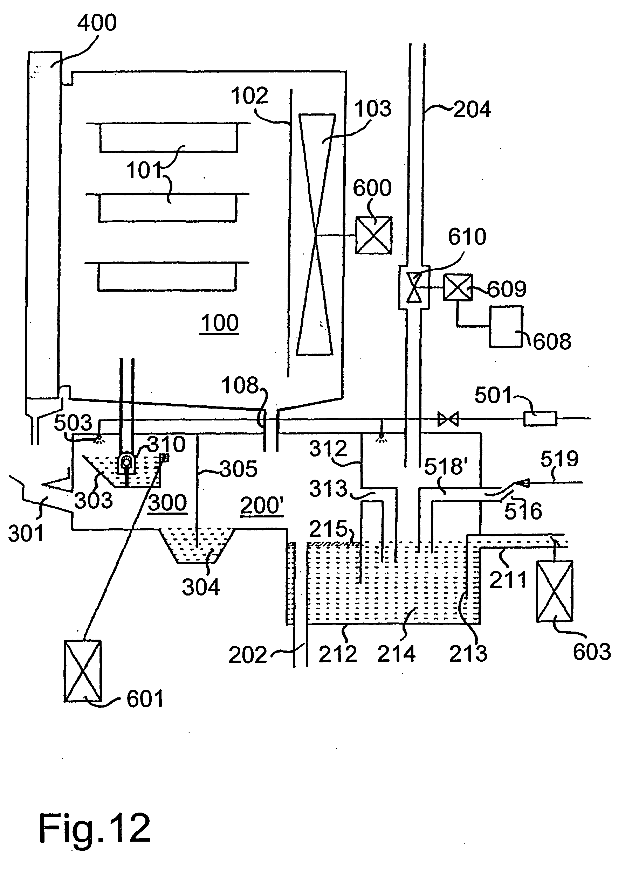

Die in Fig.12 wiedergegebene Ausführungsform ist gegenüber der Fig.11 dahingehend abgeändert, dass die Verbindung 108 vom Garraum 100 zum Wasserraum 200' immer offen ist, und somit nicht durch einen gesteuert positionierbaren dampfdichten Verschluß in Form eines mit Flüssigkeit gefüllten schwenkbaren konkaven Körpers verschließbar ist.

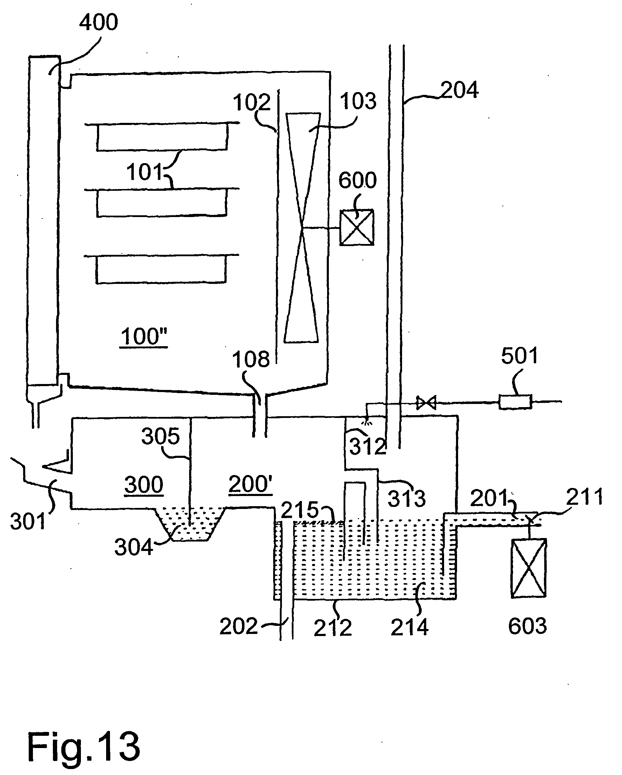

Die in einer schematischen Darstellung der Fig.13 wiedergegebene Ausführungsform ist gegenüber der Fig.12 dahingehend vereinfacht, dass keine Verbindung zwischen Frischluftraum 300 und Garraum 102' vorgesehen ist. Bei diese Ausführungsform kann Frischluft beispielsweise durch Öffnen der Tür oder auf eine andere geeignete, in Fig.13 nicht näher dargestellte Weise zugeführt werden.

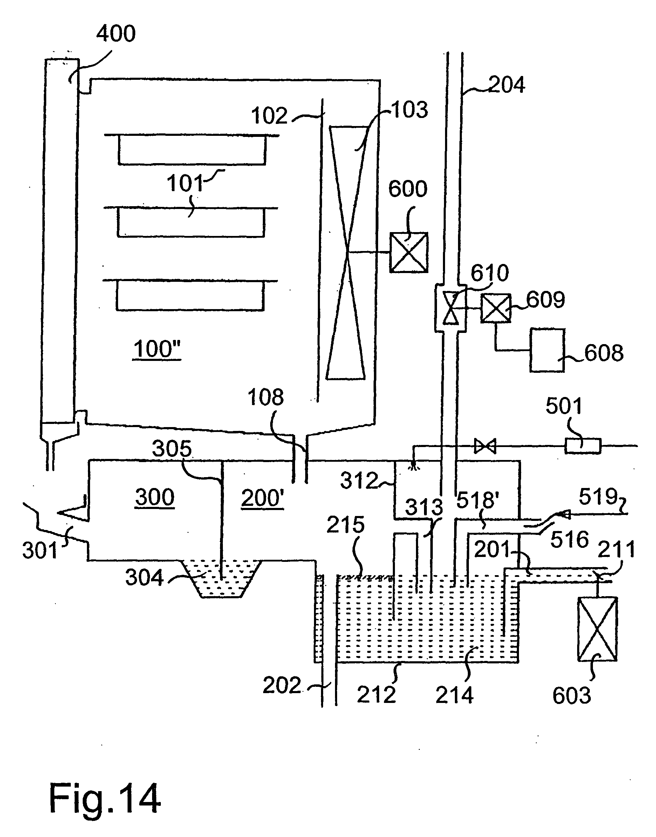

Die Ausführungsform in Fig.14 unterscheidet sich von derjenigen in Fig.13 lediglich dadurch, dass in Fig.14 in der Abluftleitung 204 analog der Ausführungsformen in Fig.11 und 12 eine Absaugvorrichtung 610 vorgesehen ist, die von einem über die Steuereinheit 600 hinsichtlich der Drehzahl gesteuerten Motor 609 angetrieben ist.

### Bezugzeichenliste

- 100, 100', 100": Garraum
- 101: Gargutbehälter
- 102: Luftleitblech
- 103: Umluftrad
- 104: Türdichtung
- 106: Wärmetauscherfläche
- 107, 107': Verbindungsleitung für Frischluftzufuhr zum Garraum
- 108, 108': Verbindungsleitung für Abluft (Wrasen) aus Garraum

- 200,: 200', 200" Abwasserraum
- 200₁', 200₂': Abwasserraum-Bereiche
- 200₃': Verbindung zw. 200₁' und 200₂'
- 201: Abflussleitung
- 201': Überlaufkante an 201
- 202: Fettablaufrohr
- 202': Überlaufkante an 202
- 203: konkaver Körper bei 108
- 203': konkaver Körper bei 108'
- 204: Abluftleitung
- 205, 205': Abluft
- 206: Sonde für 215
- 207: Temperatursonde
- 208: Rohrbogen
- 209: Flüssigkeit in 208
- 210: plane Verschlussklappe bei 108
- 211: Absperrklappe
- 212: Auffangbehälter für 214
- 213: Fettabweiser
- 214: Abwasser in 212
- 215: Fettschicht
- 216: Flüssigkeit in 203
- 216': Flüssigkeit in 203'
- 217: Boden von 200
- 218: Dichtelement (Schwimmer) in 203
- 218': Dichtelement
- 219: Führung von 218
- 220: Erweiterung

- 300: Frischluftraum
- 300': Frischluftraum
- 301: Zugang zu 300
- 301': Zugang zu 300'
- 302: Boden von 300
- 303: konkaver Körper bei 107
- 303': konkaver Körper bei 107'
- 304, 304': Wasservorlage
- 305, 305'₁, 305'₂: Trennwand
- 306: Frischluft
- 307: plane Verschlussklappe bei 107
- 308: Dichtelement (Schwimmer) von 303
- 308': Dichtelement (Schwimmer) von 303'
- 309: Führung von 309
- 310: Flüssigkeit in 303
- 310': Flüssigkeit in 303'
- 311: Auffangbehälter von 304
- 312: Trennwand in 200'
- 312': Verbindung zwischen 300' und 301'
- 313: Leitung
- 313': Ende von 313

- 400: Tür
- 401: Türtropfwanne
- 402: Abfluss von 401

- 500: Frischwasser-Zuführleitung
- 501: Wasserdurchflusszähler
- 502: Düse bei 203
- 502': Düse bei 203'
- 503: Düse bei 303
- 504: Düse
- 504': Ablöschdüse
- 505: Sperrventil für 502
- 506: Sperrventil für 503
- 507: Sperrventil für 504
- 509: Überlauf Wasser
- 512: Flüssigkeit in 513
- 512': Flüssigkeit in 515
- 513: konkaver Körper
- 514: Dichtelement
- 515: Behälter
- 516: Klappe
- 517: Steuer-/Regeleinrichtung
- 518, 518': Leitung
- 518": Ende von 518'
- 519: Luftzufuhr

- 600: Motor von 103
- 601: Motor
- 602: Motor
- 603: Motor für 211
- 603': Motor von 516
- 604: Abtriebswelle von 602
- 605: Abtriebswelle von 603
- 606: Abtriebswelle von 601
- 608: Steuereinheit für 609
- 609: Motor von 610
- 610: Saugeinrichtung

## Patentansprüche

1. Gerät zum Zubereiten von Nahrungsmitteln mittels Dampf und/oder Heißluft, das an die Wasserversorgung und gegebenenfalls das Abwassersystem eines Hauses angeschlossen ist und unter einem Garraum (100) einen Abwasserraum (200) aufweist, **dadurch gekennzeichnet, dass**
zusätzlich unter dem Garraum (100) ein Frischluftraum (300) vorgesehen ist;
eine Verbindungsleitung (107) zwischen dem Garraum (100) und dem Frischluftraum (300) einen gesteuert positionierbaren, dampfdichten Verschluss (303, 308, 310) aufweist;
eine weitere Verbindungsleitung (108) zwischen dem Garraum (100) und dem Abwasserraum (200) gegebenenfalls einen gesteuert positionierbaren, dampfdichten Verschluss (203, 216, 218) aufweist und
der Abwasserraum (200) gegebenenfalls über eine Wasservorlage (512, 513; 512', 515) mit einer Abluftleitung (204) in Verbindung steht.

2. Gerät nach Anspruch 1, **dadurch gekennzeichnet, dass** die Wasservorlage ein mit Flüssigkeit (512) gefüllter, motorgesteuert positionierbarer, schwenkbarer konkaver Körper (513) ist, in welche(n) die Abluftleitung (204) vorsteht und welchem gegebenenfalls ein in der Flüssigkeit (512) schwimmendes, vorzugsweise geführtes Dichtelement zugeordnet ist.

3. Gerät nach Anspruch 1, **dadurch gekennzeichnet, dass** die Wasservorlage ein mit Flüssigkeit (512') gefüllter, stationärer Behälter (515) ist, in welchen die Abluftleitung (204) vorsteht und an welchen zum Abkühlen der Abluft (512') aus dem Abwasserraum (200) ein Frischluft zuführendes, verschließbares Verbindungsrohr (516, 518) angeschlossen ist.

4. Gerät nach Anspruch 3, **dadurch gekennzeichnet, dass** das behälterseitige Ende des Verbindungsrohrs (516) in Form einer Venturidüse ausgebildet ist.

5. Gerät nach Anspruch 1, **dadurch gekennzeichnet, dass** das Gemisch (Wrasen) im Abwasserraum (200) zum Abkühlen durch die Wasservorlage (512, 513; 512', 515) in die Abluftleitung (510) gesaugt (609, 610) oder gedrückt wird.

6. Gerät zum Zubereiten von Nahrungsmitteln mittels Dampf und/oder Heißluft, das an die Wasserversorgung und gegebenenfalls das Abwassersystem eines Hauses angeschlossen ist und unter einem Garraum (100) einen Abwasserraum (200) aufweist, **dadurch gekennzeichnet, dass**
zusätzlich unter dem Garraum (100) ein Frischluftraum (300) vorgesehen ist, welcher mit dem Abwasserraum (200) über eine Wasservorlage (304, 305; 208, 209) verbunden ist, und
der Abwasserraum (200) gegebenenfalls über eine Wasservorlage (512, 513; 512', 515) mit einer Abluftleitung (204) in Verbindung steht.

7. Gerät nach Anspruch 6, **dadurch gekennzeichnet, dass** eine Trennwand (305) zwischen Frischluftraum (300) und Abwasserraum (200) in die Wasservorlage (304) vorsteht.

8. Gerät nach Anspruch 6, **dadurch gekennzeichnet, dass** die Wasservorlage (209) als mindestens ein Böden (217, 302) des Abwasserraums (200) und des Frischluftraums (300) verbindender, mit Flüssigkeit (209) gefüllter Rohrbogen (208) ausgebildet ist.

9. Gerät zum Zubereiten von Nahrungsmitteln mittels Dampf und/oder Heißluft, das an die Wasserversorgung und gegebenenfalls das Abwassersystem eines Hauses angeschlossen ist und unter einem Garraum (100) einen Abwasserraum (200') aufweist, **dadurch gekennzeichnet, dass**
zusätzlich unter dem Garraum (100) ein Frischluftraum (300) vorgesehen ist;
eine Verbindungsleitung (107) zwischen Garraum (100) und Frischluftraum (300) einen gesteuert positionierbaren, dampfdichten Verschluss (303, 308, 310) aufweist;
eine weitere Verbindungsleitung (108) zwischen Garraum (100) und Abwasserraum (200') gegebenenfalls einen gesteuert positionierbaren, dampfdichten Verschluss (203, 216, 218) aufweist,
der Frischluftraum (300) und der Abwasserraum (200) über eine Wasservorlage (304, 305; 208, 209) verbunden sind, und
der Abwasserraum (200') über eine Wasservorlage (212, 214) einer Fettabscheidevorrichtung (202, 212, 214, 215) mit Abflussleitung (201) mit einer Abluftleitung (204) in Verbindung steht.

10. Gerät zum Zubereiten von Nahrungsmitteln mittels Dampf und/oder Heißluft, das an die Wasserversorgung und gegebenenfalls das Abwassersystem eines Hauses angeschlossen ist und unter einem Garraum (100") einen Abwasserraum (200') aufweist, **dadurch gekennzeichnet, dass**
unter dem Garraum (100") ein Frischluftraum (300) und
eine Verbindung (108) zwischen Garraum (100") und Abwasserraum (200) vorgesehen sind,
der Frischluftraum (300) und der Abwasserraum (200') über eine Wasservorlage (304, 305; 208, 209) verbunden sind, und
der Abwasserraum (200') über eine Wasservorlage (212, 214) einer Fettabscheidevorrichtung (202, 212, 214, 215) mit Abflussleitung (201) mit einer Abluftleitung (294) in Verbindung steht.

11. Gerät nach einem der Ansprüche 1 oder 9, **dadurch gekennzeichnet, dass** der dampfdichte Verschluss von Leitungen einen mit Flüssigkeit (216, 310) gefüllten, motorgesteuert positionierbaren, konkaven Körper (203, 303), in welche(n) die Verbindungsleitung (107, 108) zum Garraum (100) mit regulierbarer Eintauchtiefe (K) vorsteht, und
ein in der Flüssigkeit (216, 301) schwimmendes, vorzugsweise geführtes Dichtelement (218, 219; 308, 309) aufweist.

12. Gerät nach einem der Ansprüche 1 oder 9, **dadurch gekennzeichnet, dass der** dampfdichte Verschluss jeweils in Form einer mit Überdruckventil versehenen, gesteuert positionierbaren planen Verschlussklappe (307; 210) ausgeführt ist.

13. Gerät nach einem der vorhergehenden Ansprüche **gekennzeichnet durch** eine Druckregelung im Garraum (100, 100') **durch** Ausdehnung eines Gasgemisches (Luft/Dampf), welche Ausdehnung **durch** entsprechendes Ansteuern von mindestens einem dampfdichten Verschluss steuerbar ist.

14. Gerät nach einem der Ansprüche 1, 6, 9 oder 10, **dadurch gekennzeichnet, dass** von dem Frischluftraum (300) nach außen ein freier, nicht verschließbarer Zugang (301) vorgesehen ist, der so dimensioniert und positioniert ist, dass bei Eintreten eines extremen Störungsfalls, bei dem Abflussleitung(en) (201) und Fettablaufleitung(en) (202) verstopft und/oder verschlossen sind, Wrasen, gegebenenfalls Wasser aus den Düsen (502 bis 504) im Abwasserraum (200, 200', 200") und/oder Frischluftraum (300, 300') und mögliches Rückstauwasser aus der Abflussleitung (201) durch die Wasservorlage (304, 305; 208, 209) und den Frischluftraum (300) über den nicht verschließbaren Zugang (301) nach außen abgeleitet wird, ohne dass die Düsen (502 bis 504) im Frisch- und Abwasserraum mit den Abwässern in Kontakt kommen.

15. Gerät nach Anspruch 11, **dadurch gekennzeichnet, dass** Abwasser aus einer Türtropfwanne (401, 402) über den nicht verschließbaren Zugang (301, 301') in die Wasservorlage (304, 304', 208, 209) abführbar ist.

16. Gerät nach einem der Ansprüche 1, 6, 9 oder 10, **dadurch gekennzeichnet, dass** eine zentrale Einheit in Form eines Wasserdurchflusszählers (501) Ventilen (505 bis 507) vorgeschaltet ist, über welche alle in dem Gerät vorgesehenen Düsen (502 bis 504) und/oder Wassereinspritzvorrichtungen versorgt werden, wobei immer nur ein Ventil geschaltet wird und
dass die Signale von dem Wasserdurchflusszähler (501) über eine Steuer- und/oder Regeleinheit (517) zum optimalen Steuern und/oder Regeln von Garprozessen und/oder über eine Diagnostiziereinrichtung zur Diagnose verwendet werden.

17. Gerät nach den vorhergehenden Ansprüche, **dadurch gekennzeichnet, dass** der Abwasserraum einen türseitigen Bereich (200₁') und einen abluftseitigen Bereich (200₂') aufweist, wobei die beiden Bereiche durch eine Verbindungseinheit (200₃') verbunden sind;
zwischen den Abwasserbereichen (200₁', 200₂') der Frischluftraum (300') vorgesehen ist;
eine Verbindungsleitung (108') zwischen dem Garraum (100') und dem türseitigen Abwasserraum-Bereich (200₁') gegebenenfalls einen gesteuert positionierbaren dampfdichten Verschluss (203', 271', 218')aufweist;
eine Verbindungsleitung (107') zwischen dem Garraum (100') und dem Frischluftraum (300') einen gesteuert positionierbaren, schwenkbaren dampfdichten Verschluss (303', 308', 310') aufweist;
eine erste dampfdichte Verbindung zwischen dem türseitigen Abwasserraum-Bereich (200₁') und dem Frischwasserraum (300') als eine in eine Wasservorlage (304) vorstehende Trennwand (305₁') ausgebildet ist;
eine zweite dampfdichte Verbindung zwischen dem Frischwasserraum (300') und dem abluftseitigen Abwasserraum-Bereich (200₂') als eine in eine Wasservorlage vorstehende Trennwand (305₂') ausgebildet ist und
der abluftseitige Abwasserraum-Bereich (200₂') mit der Abluftleitung (510) in Verbindung steht.

18. Gerät nach den vorhergehenden Ansprüchen, **dadurch gekennzeichnet, dass,** wenn gesteuert von der Steuer/Regeleinrichtung (517) nur der die Leitung (107, 107') vom Garraum (100, 100') zum Frischluftraum (300, 300') verschließende konkave Körper (303, 303') mit Flüssigkeit gefüllt ist, sich der Garraum (100, 100') in einem drucklosen und bei zum Abwasserraum (200, 200') offener Leitung (108, 108') in einem nach außen offenen Zustand befindet.

19. Gerät nach einem der vorhergehenden Ansprüche, **dadurch gekennzeichnet, dass,** wenn gesteuert durch die Steuer/Regeleinrichtung (517) beide zum Verschließen der Leitungen (107, 108; 107', 108') vom Garraum (100, 100') zum Frischluft- und Abwasserraum (300, 200; 300', 200₁', 200₂') vorgesehenen konkaven Körper (303, 203; 303', 203') entsprechend gefüllt sind, der Überdruck im Garraum (100, 100') über die regulierbare Eintauchtiefe (K) genau steuerbar und/oder regelbar ist.

20. Gerät nach einem der vorhergehenden Ansprüche, **dadurch gekennzeichnet, dass** zum Abkühlen von Wrasen/Heißdampf (205, 205') aus dem Abwasserraum (200, 200', 200") eine Abkühlund/oder Kondensationsvorrichtung (504) in der Abluftleitung (204) vorgesehen ist.

21. Gerät nach einem der vorhergehende Ansprüche, **dadurch gekennzeichnet, dass** zum Aufwärmen von zuzuführender Frischluft (306) eine durch den Abwasserraum (200) geführte Frischluft-Zuführleitung (107") oder die Verbindungseinheit (200₃') zwischen den Abwasserraum-Bereichen (200₁', 200₂') mit einem Wärmetauscher versehen ist.

22. Gerät nach einem der vorhergehenden Ansprüche, **dadurch gekennzeichnet, dass** zum Überwachen der Temperatur im Abwasser- und/oder Frischluftraum (200; 300) Temperaturfühler vorgesehen sind.

23. Gerät nach einem der Ansprüche 1, 6, 9, 10, 17 bis 19, **dadurch gekennzeichnet, dass** in der Abluftleitung (204) eine von einem drehzahl-gesteuerten Motor (608, 609) angetriebene Saugeinrichtung (610) vorgesehen ist.

24. Gerät nach einem der Ansprüche 9 oder 10, **dadurch gekennzeichnet, dass** eine Trennwand (312) und eine mit dieser (312) verbundene Leitung (313) im Abwasserraum (200') in die Wasservorlage (212, 214) vorstehen.

25. Gerät nach einem der Ansprüche 9 oder 10, **dadurch gekennzeichnet, dass** in die Wasservorlage (212, 214) eine Luftzuführleitung (518') mit steuerbarer Luftklappe (516) in der Weise vorsteht, dass das Leitungsende (518") der Luftzuführleitung (518') in der Wasservorlage (212, 214) tiefer liegt als die Überlaufkante (201') der Abflussleitung (201), jedoch höher liegt als das Leitungsende (313') der Trennwand-Leitung (313).

26. Gerät nach einem der Ansprüche 1, 6, 9, 10 oder 17, **dadurch gekennzeichnet, dass** zwischen dem Abwasserraum (200, 200', 200") und dem Hausabwassersystem eine Fettabscheidevorrichtung (202, 212 bis 215) vorgesehen ist.

27. Gerät nach Anspruch 26, **dadurch gekennzeichnet, dass** eine Abflussleitung (201) der Fettabscheidevorrichtung mittels einer steuerbaren Absperrklappe (211) versehen ist.

28. Gerät nach den Ansprüchen 26 und 27, **dadurch gekennzeichnet, dass** die Absperrklappe (211) von einem mittels einer Oberflächensonde (206) der Fettabscheidevorrichtung gesteuerten Motor (603) betätigbar ist.

29. Gerät nach den Ansprüchen 26 bis 28, **dadurch gekennzeichnet, dass** die Fettabscheidevorrichtung einen mit einer ersten Überlaufkante (202') im oberen Bereich versehenen, nach unten ausgerichteten, offenen Fettablauf (202) aufweist, der zu einem Fettauffangbehälter führt.

30. Gerät nach den Ansprüchen 26 bis 29, **dadurch gekennzeichnet, dass** die Fettabscheidevorrichtung eine tiefer als die erste Überlaufkante (202') angeordnete zweite Überlaufkante (201') an der Abflussleitung (201) aufweist.
